# EUROPEAN PATENT SPECIFICATION

(11) **EP 2 837 856 B1**
(45) Date of publication and mention of the grant of the patent: **26.10.2016**
(21) Application number: 13180392.6
(22) Date of filing: 14.08.2013
(51) Int. Cl.: F16J 15/16, F16J 15/40, F16J 15/447

(54) **Fluid seal arrangement and method for constricting a leakage flow through a leakage gap**
Flüssigkeitsdichtungsanordnung und Verfahren zum Einziehen einer Leckageströmung durch eine Leckagekluft
Agencement de joint de fluide et procédé pour confiner un écoulement de fuite à travers un espace de fuite

(43) Date of publication of application: 18.02.2015
(73) Proprietor: General Electric Technology GmbH, 5400 Baden (CH)
(72) Inventor: Simon-Delgado, Carlos, 5400 Baden (CH); Stefanis, Vasileios, 5443 Niederrohrdorf (CH); Shchukin, Sergey, 5507 Mellingen (CH); Krueckels, Joerg, 5413 Birmenstorf (CH)
(74) Representative: Bernotti, Andrea

(56) References cited:
- FR-A- 912 791
- FR-A1- 2 512 914
- JP-A- 2011 032 908
- US-A1- 2013 078 091

## Description

### Technical Field

The present invention relates to a fluid seal arrangement for constricting a leakage flow directed through a leakage gap bordered by a rotational and a stationary component comprising at least one nozzle opening in the rotating and/or stationary component facing towards the rotating or stationary component of an opposite side of the leakage gap respectively in order for injecting a liquid or gaseous fluid flow through the nozzle opening into the leakage gap. Such leakage flow typically occurs in rotary flow machineries like in gas turbine arrangements especially in the compressor and turbine unit thereof, in which rotating parts encloses gaps with stationary components of the units through which a small portion of the axial flow of compressed air or hot gases the units can pass without any precaution. Further a method is disclosed for constricting a leakage flow through a leakage gap bordered by a rotational and a stationary component by injecting a liquid or gaseous fluid flow into the leakage gap with a direction of flow being transversely to the direction of flow of the leakage flow.

### Background of the invention

The document US 7,238,001 B2 discloses a seal arrangement used in a rotary flow machine preferably in a gas turbine engine in which a flow of hot gases passing through the turbine stage axially performing expansion work for accelerating the momentum of rotation of the rotor. To avoid leakage flow through gaps which are bordered radially between rotating and stationary components of the turbine stage especially said leakage flow does not contribute to energy generation well known techniques are used to reduce the clearance of the gap for example by applying labyrinth-sealing structures between rotating and stationary components. Labyrinth-sealing provides radially interdigitating structures which prevent an axially free flow path through the gap by applying mechanical flow obstructions with a radially extension between the gap.

Alternatively or in combination with the before mentioned labyrinth-sealing US 7,238,001 B2 proposes the injection of a fluid flow into the leakage gap with a direction of flow being oriented transversely to the direction of the leakage flow so that the leakage flow will be constricted by the injected fluid flow fluid dynamically purely Hereto a slot is provided in the rotating or stationary component each bordering the leakage gap through which fluid flow is injected and directed across the leakage gap in order to present a fluid flow to further constrict the available leakage gap as an effective standing fluid sheet there across.

US 2013/078091 A1 shows a bearing chamber 40 with a sealing air cooling arrangement comprising a fluid spray nozzle 64. The fluid spray nozzle is configured to supply a cooling fluid in the form of an oil jet 66 to the non-contact surface 51 of the seal land 46, i.e. on the side of the seal land which faces away from the fluid flow path. The fluid supply nozzle 64 is supplied with oil from an oil reservoir (not shown) contained within the engine oil distribution system of the gas turbine engine 10, and is supplied to the nozzle 64 by an oil pump (not shown) via a conduit 69. Alternatively, the oil could be a fluid seal arrangement for constricting a leakage flow directed through a leakage gap bordered by a rotational and a stationary component the bearing chamber 40 by a pump also located within the bearing chamber 40. The oil jet 66 (which is at a lower temperature relative to the sealing air) contacts the seal land non-sealing surface 51. The relatively cool oil cools the seal land, which in turn cools the sealing air flowing through the flow path 60. The warmed oil then flows back into the bearing chamber sump.

FR 912 791 A shows a fluid seal arrangement for constricting a leakage flow directed through a leakage gap bordered by a rotational and a stationary component. The cooling fluid is supplied from an autonomous cooling unit 8.

JP 2011 032908 A which constitutes the c.p.a. according to the preamble of claim 1, shows a centrifugal compressor which stably operates with high efficiency even under a high-speed and high-pressure condition by preventing the unstable vibration of a rotor while inhibiting the leakage of fluid. The centrifugal compressor includes: a casing 1; the rotor 4 having a rotating shaft rotatably installed in the casing 1 and an impeller 3g mounted to the rotating shaft and compressing the fluid through rotation; a seal 14 preventing the fluid from leaking from a high pressure side to a low pressure side and between a stationary section and the rotor 4 in the casing 1; a nozzle 24 of high-pressure fluid provided in the seal 14 for reducing the flow velocity of leakage fluid in a circumferential direction of the rotor 4; a high pressure introductory part 25 formed on the outer diameter side of the seal 14 and communicating with the nozzle 24 to introduce the high-pressure fluid; and a ring 26 provided on the inner diameter side of the seal 14 and resisting to the deformation of the seal 14.

### Summary of the Invention

It is an object of the invention to provide an enhanced fluid seal arrangement for constricting a leakage flow directed through a leakage gap bordered by a rotational and a stationary component based on the before disclosed principle, i. e. using a dynamically generated flow obstruction within the leakage gap, such that the efficiency of the rotary machine shall be enhanced significantly.

The object is achieved by the features of claims 1 and 8. The invention can be modified advantageously by the features disclosed in the sub claims as well in the following description especially referring to preferred embodiments.

For achieving an enhanced operation of a rotary flow machine it is a matter fact to eliminate any loss mechanisms involved in the flow path through a rotary flow machine, especially to avoid also any leakage flow between rotational and stationary components bordering a leakage gap. To realize the leakage flow suppression it is inventively proposed to take advantage of synergies which help to reduce the energy expenditure to establish a fluid flow for constricting the available leakage gap as an effective standing fluid sheet across the leakage gap.

According to the invention a fluid seal arrangement for constricting a leakage flow directed through a leakage gap bordered by a rotational and a stationary component comprising at least one nozzle opening in the rotating and/or stationary component facing towards the rotating or stationary component of an opposite side of the leakage gap respectively in order for injecting a liquid or gaseous fluid flow through the nozzle opening into the leakage gap is inventively improved by connecting the at least one nozzle opening fluidly to a cooling channel inside the rotating and/or stationary component, so that that fluid flow emanating at the nozzle opening consists of a cooling fluid of the rotating and/or stationary component exclusively.

The inventive fluid seal arrangement uses the cooling medium of the already existing cooling system being integrated in the rotary and/or stationary components of a rotary flow machine for example in a compressor or turbine unit of a gas turbine arrangement. To avoid overheating of vanes and blades in a hot gas flow path of a turbine stage unit a complex system of cooling channels is integrated inside each vane and blade through which a cooling medium passes, preferably in from of compressed air taken from a section of the compressor unit. Said cooling air may cool the components in way of convective and/or impingement cooling, depending on the structural design of the cooling channels.

After performing the cooling task the cooling medium flows through the outlet opening of the cooling channels into the main channel of the rotary flow machine. It is inventively proposed to use at least a part of the cooling medium by bypassing an amount of cooling medium close upstream to the outlet opening of the cooling channel into a so called feed channel merging at the nozzle opening for injecting into the leakage gap. The technical advantage of the invention is the fact that necessary sealing fluid flow for sealing purpose is already available from previous application, i. e. from the cooling system inside the rotational and/or stationary components and therefore it is not necessary to provide any extra supply of fluid flow injecting into the leakage gap. Any direct supply lines for example from a section of the compressor unit for feeding a fluid flow to the at least one nozzle opening aren't necessary anymore rather cooling medium is available in all heat exposed components inside a rotary flow machine so that it is easily possible to tap a cooling channel of a rotary or stationary component close to the outlet opening through which cooling medium leaves into the main channel of the rotary flow machine.

The seal arrangement is combined with the before described principle of reuse of cooling medium as a fluid flow for injecting through the nozzle opening into the leakage gap to fill up the leakage gap in a manner of a volumetric blockage for the leakage flow, concerning the use of the energy flow of the liquid or gaseous fluid flow injected through the nozzle opening into the leakage gap acting on to the rotating or stationary component being opposite of the leakage gap to the nozzle opening. The idea uses the flow pulse which acts onto the rotating or stationary component onto which the fluid flow impacts after injecting through the nozzle opening into the leakage gap. The flow pulse can be used either for enhancing or decreasing the momentum of rotation of the rotating component.

The fluid seal arrangement for constricting a leakage flow directed through a leakage gap bordered by a rotational and a stationary component comprising at least one nozzle opening in the direction and/or stationary component facing towards the rotating and stationary component of an opposite side of the leakage gap respectively in order for injecting a liquid or gaseous fluid flow through the nozzle opening into the leakage gap is inventively improved by arranging at least one nozzle opening with a nozzle axis along which the fluid flow is directed such that the nozzle axis is tilted relative to a radial direction of an axis of rotation of the rotational component such that a momentum of rotation of the rotating component is enhanced or decreased by the fluid flow in emanating the at least one nozzle opening and impacting on the rotating or stationary component be in opposite of the leakage gap to the nozzle opening.

In contrast to the known arrangement according to US 7,238,001 B2, in which the fluid flow direction is directed radially in a plane which crosses the axis of rotation of the rotationally component orthogonally, the direction of the fluid flow injecting through that least one nozzle opening encloses an angle α ≠ 0°with the radial direction relative to the before defined plane, i. e. in a view projection parallel to the axis of rotation of the rotational component or a plane which crosses the axis of rotation orthogonally.

By suitable choice of the inclination of the nozzle axis in or opposite to the rotational direction of the rotational component the impact of the fluid flow onto the rotational or stationary component can enhance or decrease the momentum of rotation.

In one preferred embodiment the at least one nozzle opening is arranged at the stationary component with a nozzle axis including an angle α which shall apply basically 0° < α < ± 90° preferably ± 5° ≤ α ≤ ± 50°, with a radial direction crossing the nozzle opening such that the nozzle axis is inclined in or opposite to the rotational direction of the rotational component. In case of an inclination in the rotational direction of the rotational component the fluid flow impact onto the rotational component enhances the moment of rotation. In case of an inclination of the nozzle axis opposite to the rotational direction of the rotational component the momentum of rotation will decrease. It is a matter of fact that the main aspect is to enhance the momentum of rotation but the scope of the invention shall cover also the possibility of decreasing the momentum of rotation.

In a further preferred embodiment the at least one nozzle opening is arranged at the rotational component with a nozzle axis including in angle β ≠ 0° with a radial direction crossing the nozzle opening such that the nozzle axis is inclined in or against the rotational direction of the rotational component. The arrangement of the at least one nozzle opening at the rotational component can also be combined with the before described arrangement placing the at least one nozzle opening at the stationary component. In both cases the choice of the amount of inclination of the nozzle axis determines the amount of influence on the momentum of rotation and the orientation of inclination determines the type of influence, i. e. whether the momentum of rotation will be enhanced or decreased.

In case of a combined realization of nozzle openings at the rotational and stationary components the orientation of the nozzle axis can be chosen independently from each which means α ≠ β but preferably α and β are equal and have the same orientation.

One further embodiment is conceivable which provides at least one nozzle opening at the rotating component having a nozzle axis such that the momentum of the rotation will be enhanced. Further the stationary component also provides at least one nozzle opening having a nozzle axis in opposite orientation for decreasing the momentum of rotation. The supply of fluid flow through each nozzle openings can be controlled independently so that in a first operating mode the nozzle opening at the rotating component will be supplied with fluid flow for enhancing the momentum of rotation while the fluid flow supply for that least one nozzle opening at the stationary component is suppressed. In a second operating mode the fluid flow will be injected by the nozzle opening at the stationary component to decrease the momentum of rotation while the supply of fluid flow at the nozzle openings on the rotational component is suppressed.

The inventive idea is applicable basically to all rotational flow machines but preferably to a compressor and a turbine stage of a gas turbine arrangement.

Typically the rotational components of such rotational flow machines concern blades or sections of a surface of a rotor. The stationary components concern the housing or a component connected to the housing directly or indirectly, preferably a vane, a heat shield element or a combustor liner which borders the turbine housing axially. In all these cases cooling channels are integrated in heat exposed components typically so that there will be no additionally effort to use cooling air for constricting the leakage flow through leakage gaps.

Generally the proposed reused of cooling air can be applied in a rotary flow machine at any location at which a gap occurs between rotating and stationary components and of which at least one component is cooled in the before mentioned manner. Preferred embodiments will be described in more detail in combinations with the following figures.

Further a method is described for constricting a leakage flow through a leakage gap bordered by rotational and a stationary component by injecting a liquid or gaseous fluid flow into the leakage gap with a direction of flow being transversely to the direction of flow of the leakage flow which inventively is characterized in that the liquid or gaseous fluid flow serves as a cooling medium for cooling the rotational and/or a stationary component first before passing the leakage gap.

The inventive method takes advantage of the use of already existing resources, i. e. the reuse of cooling air which first is fed through cooling channels inside heat exposed rotational and/or stationary components inside a rotary flow machine, before entering the leakage gap for constricting purpose of the leakage flow through the leakage gap.

The liquid or gaseous fluid flow will be directed into the leakage gap such that a momentum of rotation of the rotational component is enhanced or reduced by an impact of the liquid or gaseous fluid flow with the rotational and/or stationary component.

Further details of the inventive method can be derived from the following disclosure describing preferred embodiments shown in the figures.

### Brief Description of the Figures

The invention shall subsequently be explained in more detail based on exemplary embodiments in conjunction with the drawing. In the drawing
- Fig. 1a, b: shows schematically a longitudinal section through the inner diameter platform of a blade enclosing a rim cavity with the outer diameter platform of a vane and a cross sectional view through section A-A,
- Fig. 2a: shows schematically a longitudinal section through the platform of a blade and the platform of a vane bordering a leakage gap with impingement cooling of the platform of the vane,
- Fig. 2b: shows schematically a longitudinal section of a blade with cooling channel for convective cooling the blade and a neighboring vane bordering a leakage gap,
- Fig. 2c: shows a schematically longitudinal section through a tip of a blade and a heat shield element bordering a leakage gap.

### Detailed Description of exemplary Embodiments

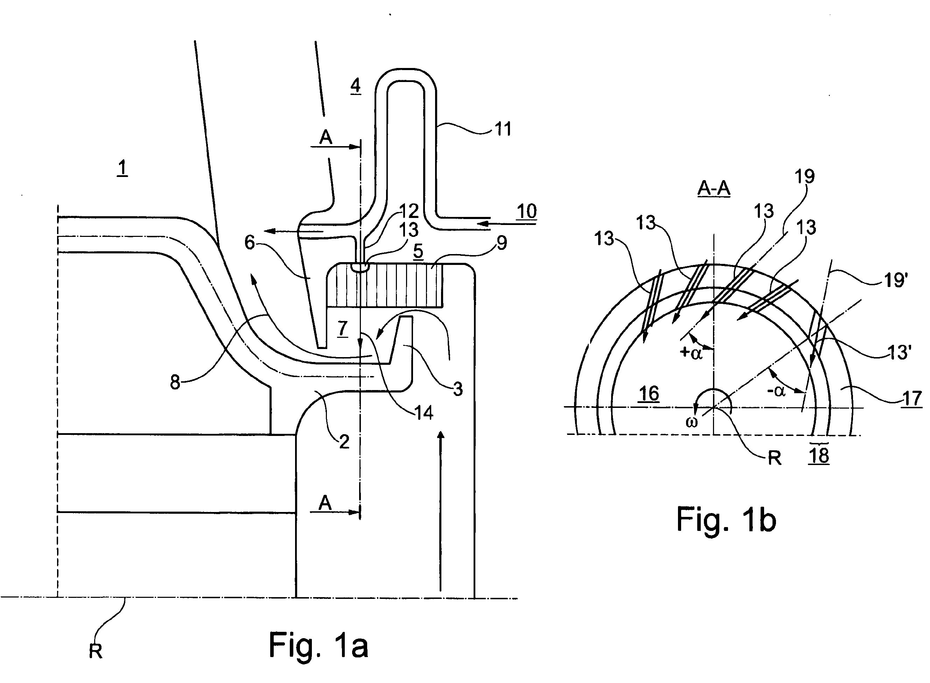

Figure 1 a shows a longitudinal section view of a rotating blade 1 around an axis of rotation R. The blade 1 comprises an inner diameter platform 2 with a knife-edge rim 3. Further a vane 4 is arranged in axial direction next to the blade 1 which is a stationary component and provides at its outer diameter also a platform 5 having a knife-edge rim 6 which borders together with the knife-edge rim 3 of the blade 1 a rim cavity 7. To reduce leakage flow 8 passing through the rim cavity 7 a honeycomb-structure 9 is attached at the platform 5 of the vane 4 for reducing the gap between platform 5 and the tip of the knife-edged rim 3 of the blade.

Due to abrassive effects on the honeycomb-structure 9 which occur during operation a leakage flow 8 passing through the rim cavity 7 is unavoidable. To reduce or restrict the leakage flow 8 partially or in a preferred manner completely it is inventively proposed to branch off a part of cooling air 10 which is fed through a cooling channel 11 inside the vane 4 into a feed line 12 which opens at a nozzle opening 13 to inject a part of the cooling air 10 as a fluid flow 14 having a flow direction transversely to the leakage flow 8 passing the rim cavity 7.

The fluid flow 14 which is injected into the rim cavity 7 constricts significantly the leakage flow 8 and acts like a fluid dynamical volumetric blockage inside the rim cavity 7.

Figure 1 a discloses the use of cooling air 10 which is fed through a cooling channel 11 and which leaves the cooling channel 11 at an opening 15 into the flow path of the flow rotary machine mainly. At least a part of the cooling air 10 will be used to establish a fluid blockage within the rim cavity 7.

Figure 1b shows a cross section along the cut line A-A in Fig. 1 a. The rotational component 16 which corresponds to the blade 1 and it's platform 2 rotates around the axis of rotation R with an orientation of rotation in anticlockwise direction. A stationary component 17, which corresponds to the vane 4 encircles the rotational component 16 enclosing a leakage gap 18, which corresponds to the rim cavity 7. To reduce leakage flow through the leakage gap 18 a multitude of nozzle openings 13 is arranged at the stationary component 17. Each of the nozzle opening 13 provides a nozzle axis 19 along which a fluid flow 14 emanates through each of the nozzle openings 13. The nozzle axis 19 encloses an angle +α with the radial direction 20 relative to the axis of rotation R. In case of the nozzle openings 13 the nozzle axis 19 is directed such that fluid flow 14 which impacts on the rotational component 16 enhances the momentum of rotation of the rotational component 16. In this case the nozzle axis is inclined in direction of rotation of the rotational component. To optimize enhancement of the momentum of rotation the angle α shall be within the angle range of 5° ≤ α ≤ 50°.

Further Figure 1b shows another possibility of arrangement of a nozzle opening 13' having a nozzle axis 19' which is inclined against the direction of rotation of the rotational component 16. By injecting a fluid flow through the nozzle opening 13' the fluid flow acts onto the rotational component such that the momentum of rotation will be decreased. Therefore the angle α is of negative value and can be within the angle range -5° ≤ α ≤ -50 ° depending on the amount of decelerating effect on the momentum of rotation of the rotating component 16.

Both illustrated cases, i.e. the nozzle arrangement at the rotating or stationary side, can be applied depending on individual situations of operations of a rotational flow machine as well in combination or alternatively.

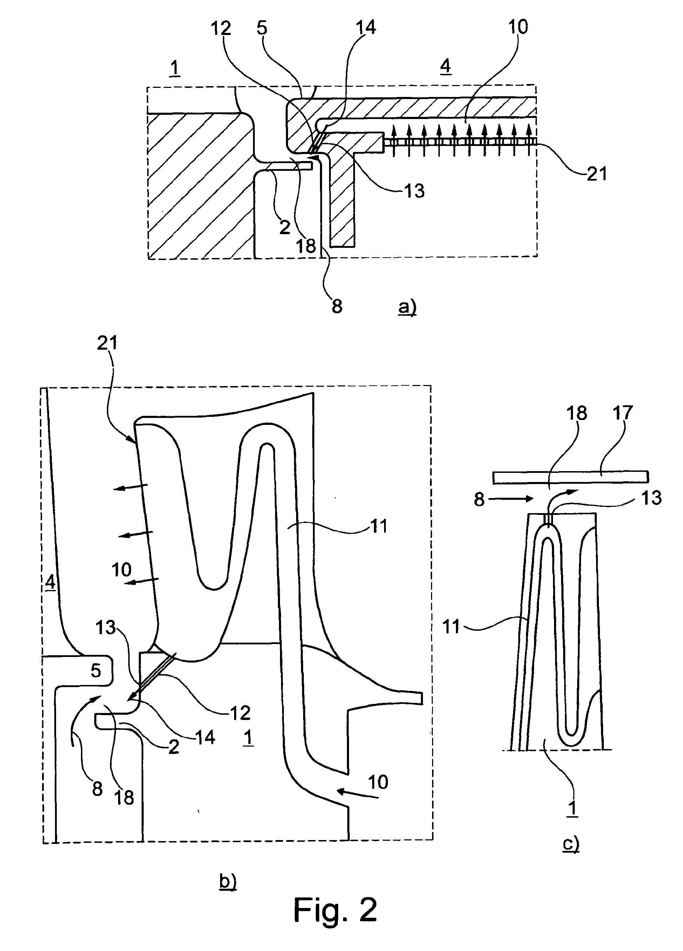

Figure 2a shows another embodiment in longitudinal section view. Here the rotating blade 1 provides an inner diameter platform 2 which borders a leakage gap 18 with the platform 5 of a vane 4. To constrict leakage flow 8 through the leakage gap 18 a fluid flow 14 is injected through the nozzle opening 13 of the feed line 12 which is supplied by cooling air 10 which cools the platform 5 of the vane 4 by impingement cooling. Hereto an impingement sheet 21 is arranged within a cooling system inside the platform 5 of the vane 4.

Figure 2b shows a longitudinal section through a blade 1 which provides a cooling channel 11 for cooling the air foil of the blade 1. Hereto cooling air 10 enters the cooling channel 11 at the foot section of the blade 1. Close before emanating into the main flow path of the flow machine at the rear edge 22 of the blade 1 a portion of the cooling air 10 enters a feed line 12 for injecting as a fluid flow 14 through the nozzle opening 13 into the leakage gap 18 bordered by the platforms 2 and 5 of the blade 1 and the vane 4. The fluid flow 14 constricts the leakage flow 8 significantly.

Figure 2c shows a longitudinal section through a part of an airfoil of a blade 1 including a cooling channel 11. At the tip 23 of the blade 1 a nozzle opening 13 is provided through which a portion of cooling air 10 is injected as the fluid flow 14 into the leakage gap 18 bordered by the tip 23 of the blade 1 and a stationary component 17, for example a heat shield element.

### List of References Numerous

- 1: blade
- 2: platform of the blade
- 3: knife-edge rim
- 4: vane
- 5: platform of the vane
- 6: knife-edged rim
- 7: rim cavity
- 8: leakage-flow
- 9: honeycomb-structure
- 10: cooling medium, cooling air
- 11: cooling channel
- 12: feed line
- 13, 13': nozzle opening
- 14: fluid flow
- 15: opening of the cooling channel
- 16: rotational component
- 17: stationary component
- 18: leakage gap
- 19: nozzle axis
- 20: radial direction
- 21: impingement sheet
- 22: rear edge of the blade
- 23: tip of the blade

## Claims

1. Fluid seal arrangement for constricting a leakage flow (8) directed through a leakage gap (18) bordered by a rotational (16) and a stationary component (17) comprising at least one nozzle opening (13) in the rotating and/or stationary component (16, 17) facing towards the rotating or stationary component of an opposite side of the leakage gap (18) respectively in order for injecting a liquid or gaseous fluid flow (14) through the nozzle opening (13) into the leakage gap (18), wherein said at least one nozzle opening (13) is fluidly connected to a cooling channel (11), **characterised in that** said cooling channel (11) is inside said rotating and/or stationary component (16, 17), wherein said fluid flow (14) emanating at the nozzle opening (13) consists of a cooling fluid from the cooling system of the rotating and/or stationary component (16, 17) exclusively, wherein the at least one nozzle opening (13) provides a nozzle axis (19) along which the fluid flow (14) is directed, and said nozzle axis (19) is tilted relative to a radial direction (20) of an axis of rotation (R) of the rotational component (16) such that a momentum of rotation of the rotating component (16) is enhanced or decreased by the fluid flow (14) emanating the at least one nozzle opening (13) and impacting on the rotating or stationary component (16, 17) being opposite of the leakage gap (18) to said nozzle opening (13).

2. Fluid seal arrangement according to claim 1, **characterized in that** the at least one nozzle opening (13) is arranged at the stationary component (17) with a nozzle axis (19) including an angle α ≠ 0° with a radial direction (20) crossing the nozzle opening (13) such that the nozzle axis (20) is inclined in or opposite to the rotational direction of the rotational component (16) and/or the at least one nozzle opening (13) is arranged at the rotational component (16) with a nozzle axis (19) including an angle β ≠ 0° with a radial direction (20) crossing the nozzle opening (13) such that the nozzle axis (19) is inclined in or against the rotational direction of the rotational component (16). Auxiliary Request

3. Fluid seal arrangement according to claim 2, **characterized in that** for α and β shall apply: α is equal to β or α is unequal to β and 0° < α, β < ± 90°, preferably ± 5° ≤ α, β ≤ ± 50°.

4. Rotational flow machine with a fluid seal arrangement according to one of the claims 1 to 4, **characterized in that** the rotational flow machine is a compressor or a turbine stage in a gas turbine arrangement and the at least one rotational component (16) is a blade (1) or a section of a surface of a rotor and the at least one stationary component (17) is a housing or a component connected to the housing directly or indirectly, preferably a vane (4), a heat shield element or a combustor liner.

5. Rotational flow machine according to claim 4, **characterized in that** the leakage gap (18) is bordered by a tip (23) of the blade (1) providing said at least one nozzle opening (13) and the housing or a component connected to the housing of the rotational flow machine, and the at least one nozzle opening (13) is connected to a cooling channel (11) inside the blade (1) for cooling the blade (1) and /or the leakage gap (18) is bordered by a tip (23) of the blade (1) and the housing or a component connected to the housing of the rotational flow machine, whereby the housing or the component provides the at least one nozzle opening (13), and the at least one nozzle opening (13) is connected to a cooling channel (11) inside the housing or the component connected to the housing for cooling the housing or the component.

6. Rotational flow machine according to claims 4, **characterized in that** the leakage gap (18) is bordered by a section of a radially inner platform (2) of the blade (1) and a section of a radially outer platform (5) of a vane (4), and the at least one nozzle opening (13) is at the blade's (1) and/or vane's (4) section side and connected to a cooling channel (11) for cooling the blade (1) or vane (4) respectively. Auxiliary Request

7. Rotational flow machine according to claims 5 or 6, **characterized in that** the cooling channel (11) is a convective cooling channel or includes an impingement cooling arrangement.

8. Method for constricting a leakage flow through a leakage gap (18) bordered by at least one rotational (16) and at least one stationary component (17) by injecting a liquid or gaseous fluid flow (14) into the leakage gap (18) with a direction of flow being transversely to the direction of flow of the leakage flow (18), **characterized in that** the liquid or gaseous fluid flow (14) serves as a cooling medium for cooling the rotational and/or a stationary component (16, 17) first before entering the leakage gap (18), wherein the liquid or gaseous fluid flow (14) is directed into the leakage gap (18) such that a momentum of rotation of the rotational component (16) is enhanced or reduced by an impact of the liquid or gaseous fluid flow (14) with the rotational and/or stationary component (16, 17).

9. Method according to claim 8, **characterized in that** the rotational and stationary components (16, 17) are part of a rotary flow machine like a compressor or a turbine stage of a gas turbine arrangement.

## Patentansprüche

1. Fluiddichtungsanordnung zur Beschränkung eines Leckstroms (8), der durch einen Leckspalt (18) gerichtet ist, der durch ein drehendes (16) und ein feststehendes Bauteil (17) begrenzt ist, enthaltend mindestens eine Düsenöffnung (13) in dem drehenden und/oder feststehenden Bauteil (16, 17), die jeweils in Richtung des drehenden oder feststehenden Bauteils einer gegenüberliegenden Seite des Leckspalts (18) weist, um einen flüssigen oder gasförmigen Fluidstrom (18) durch die Düsenöffnung (13) in den Leckspalt (18) ein zu spritzen, wobei die mindestens eine Düsenöffnung (13) in Fluidverbindung mit einem Kühlkanal (11) steht, **dadurch gekennzeichnet, dass** der Kanal (11) innerhalb des drehenden und/oder feststehenden Bauteils (16, 17) liegt, wobei der an der Düsenöffnung (13) austretende Fluidstrom (18) ausschließlich aus einem Kühlfluid aus dem Kühlsystem des drehenden und/oder feststehenden Bauteils (16, 17) besteht, wobei die mindestens eine Düsenöffnung (13) eine Düsenachse (19) bereitstellt, entlang welcher der Fluidstrom (14) gerichtet ist, und die Düsenachse (19) relativ zu einer Radialrichtung (20) einer Drehachse (R) des drehenden Bauteils (16) dergestalt gekippt ist, dass ein Drehimpuls des drehenden Bauteils (16) durch den aus der mindestens einen Düsenöffnung (13) austretenden und auf das drehende oder feststehende Bauteil (16, 17), welches sich auf der der Düsenöffnung (13) gegenüberliegenden Seite des Leckspalts (18) befindet, anprallenden Fluidstrom (14) verstärkt oder vermindert wird.

2. Fluiddichtungsanordnung nach Anspruch 1, **dadurch gekennzeichnet, dass** die mindestens eine Düsenöffnung (13) an dem feststehenden Bauteil (17) angeordnet ist, wobei eine Düsenachse (19) einen Winkel α ≠ 0° mit einer die Düsenöffnung (13) kreuzenden Radialrichtung (20) einschließt, sodass die Düsenachse (20) in der Drehrichtung oder entgegengesetzt zu der Drehrichtung des drehenden Bauteils (16) geneigt ist, und/oder die mindestens eine Düsenöffnung (13) an dem drehenden Bauteil (16) angeordnet ist, wobei eine Düsenachse (19) einen Winkel β ≠ 0° mit einer die Düsenöffnung (13) kreuzenden Radialrichtung (20) einschließt, sodass die Düsenachse (20) in der Drehrichtung oder entgegengesetzt zu der Drehrichtung des drehenden Bauteils (16) geneigt ist.

3. Fluiddichtungsanordnung nach Anspruch 2, **dadurch gekennzeichnet, dass** für α und β gelten soll: α ist ungleich β und 0° < α, β < ± 90°, vorzugsweise ± 5° ≤ α, β ≤ ± 50°.

4. Rotationsströmungsmaschine mit einer Fluiddichtungsanordnung nach einem der Ansprüche 1 bis 4, **dadurch gekennzeichnet, dass** die Rotationsströmungsmaschine ein Verdichter oder eine Turbinenstufe in einer Gasturbinenanordnung ist und das mindestens eine drehende Bauteil (16) eine Schaufel (1) oder ein Abschnitt einer Rotoroberfläche ist und das mindestens eine feststehende Bauteil (17) ein Gehäuse oder ein mit dem Gehäuse direkt oder indirekt verbundenes Bauteil ist, vorzugsweise eine Leitschaufel (4), ein Wärmeabschirmungselement oder eine Brennkammerauskleidung.

5. Rotationsströmungsmaschine nach Anspruch 4, **dadurch gekennzeichnet, dass** der Leckspalt (18) durch eine Spitze (23) der Schaufel (1), die die mindestens eine Düsenöffnung (13) bereitstellt, und das Gehäuse oder ein mit dem Gehäuse der Rotationsströmungsmaschine verbundenes Bauteil begrenzt ist und die mindestens eine Düsenöffnung (13) mit einem Kühlkanal (11) innerhalb der Schaufel (1) zum Kühlen der Schaufel (1) verbunden ist und/oder der Leckspalt (18) durch eine Spitze (23) der Schaufel (1) und das Gehäuse oder ein mit dem Gehäuse der Rotationsströmungsmaschine verbundenes Bauteil begrenzt ist, wobei das Gehäuse oder das Bauteil die mindestens eine Düsenöffnung (13) bereitstellt und die mindestens eine Düsenöffnung (13) mit einem Kühlkanal (11) innerhalb des Gehäuses oder des mit dem Gehäuse verbundenen Bauteils zum Kühlen des Gehäuses oder des Bauteils verbunden ist.

6. Rotationsströmungsmaschine nach Anspruch 4, **dadurch gekennzeichnet, dass** der Leckspalt (18) durch einen Abschnitt einer radial inneren Plattform (2) der Schaufel (1) und einen Abschnitt einer radial äußeren Plattform (5) einer Leitschaufel (4) begrenzt ist und die mindestens eine Düsenöffnung (13) auf der Seite des Abschnitts der Schaufel (1) und/oder der Leitschaufel (4) ist und mit einem Kühlkanal (11) zum Kühlen der Schaufel (1) bzw. der Leitschaufel (4) verbunden ist.

7. Rotationsströmungsmaschine nach den Ansprüchen 5 oder 6, **dadurch gekennzeichnet, dass** der Kühlkanal (11) ein Konvektionskühlkanal ist oder eine Prallkühlungsanordnung einschließt.

8. Verfahren zum Beschränken eines Leckstroms durch einen Leckspalt (18), der durch mindestens ein drehendes (16) und mindestens ein feststehendes Bauteil (17) begrenzt ist, durch Einspritzen eines flüssigen oder gasförmigen Fluidstroms (14) in den Leckspalt (18), wobei eine Strömungsrichtung quer zu der Strömungsrichtung des Leckstroms (18) verläuft, **dadurch gekennzeichnet, dass** der flüssige oder gasförmige Fluidstrom (14) zuerst als ein Kühlmedium zum Kühlen des drehenden und/oder eines feststehenden Bauteils (16, 17) dient, bevor er in den Leckspalt (18) eintritt, wobei der flüssige oder gasförmige Fluidstrom (14) dergestalt in den Leckspalt (18) gerichtet ist, dass ein Drehimpuls des drehenden Bauteils (16) durch einen Anprall des flüssigen oder gasförmigen Fluidstroms (14) an dem drehenden und/oder feststehenden Bauteil (16, 17) verstärkt oder verringert wird.

9. Verfahren nach Anspruch 8, **dadurch gekennzeichnet, dass** das drehende und das feststehende Bauteil (16, 17) Teil einer Rotationsströmungsmaschine, wie etwa eines Verdichters oder einer Turbinenstufe einer Gasturbinenanordnung sind.

## Revendications

1. Joint d'étanchéité destiné à contracter un écoulement de fuite (8) orienté au sein d'un trou calibré (18) délimité par un composant rotatif (16) et un composant stationnaire (17), qui comprend au moins une ouverture de buse (13) dans le composant rotatif et/ou stationnaire (16, 17) tournée vers le composant rotatif ou stationnaire d'un coté opposé au trou calibré (18), respectivement, de façon à injecter un écoulement de liquide ou de gaz (14), par le biais de l'ouverture de buse (13), dans le trou calibré (18), dans lequel ladite ouverture de buse (13) est reliée de manière fluide à un canal de refroidissement (11), **caractérisé en ce que** ledit canal de refroidissement (11) se trouve à l'intérieur dudit composant rotatif et/ou stationnaire (16, 17), dans lequel ledit écoulement de liquide (14) qui émane de l'ouverture de buse (13) se compose d'un liquide de refroidissement qui provient du système de refroidissement du composant rotatif et/ou stationnaire (16, 17) exclusivement, dans lequel l'ouverture de buse au moins (13) offre un axe de buse (19) le long duquel l'écoulement de liquide (14) est orienté, et ledit axe de buse (19) est incliné par rapport à une direction radiale (20) d'un axe de rotation (R) du composant rotatif (16) de sorte qu'une dynamique de rotation du composant rotatif (16) soit améliorée ou réduite par l'écoulement de liquide (14) qui émane de l'ouverture de buse au moins (13) et qui a un impact sur le composant rotatif ou stationnaire (16, 17) opposé au trou calibré (18) par rapport à ladite ouverture de buse (13).

2. Joint d'étanchéité selon la revendication 1, **caractérisé en ce que** l'ouverture de buse au moins (13) est placée au niveau du composant stationnaire (17) avec un axe de buse (19) qui comprend un angle α ≠ 0° avec une direction radiale (20) qui croise l'ouverture de buse (13) de sorte que l'axe de buse (20) soit incliné dans ou opposé au sens de rotation du composant rotatif (16), et/ou l'ouverture de buse au moins (13) est placée au niveau du composant rotatif (16) avec un axe de buse (19) qui comprend un angle β ≠ 0° avec une direction radiale (20) qui croise l'ouverture de buse (13) de sorte que l'axe de buse (19) soit incliné dans ou contre le sens de rotation du composant rotatif (16).

3. Joint d'étanchéité selon la revendication 2, **caractérisé en ce que**, pour que α et β s'appliquent : α est égal à β, ou α n'est pas égal à β, et 0° < α, β < ±90°, de préférence ± 5° ≤ α, β ≤ ± 50°.

4. Machine à écoulement rotationnel muni d'un joint d'étanchéité selon l'une des revendications 1 à 3, **caractérisée en ce qu'**elle est un étage de compresseur ou de turbine dans une turbine à gaz, et le composant rotatif au moins (16) est une pale (1) ou une section d'une surface d'un rotor, et le composant stationnaire au moins (17) est un logement ou un composant relié directement ou indirectement au logement, de préférence une aube (4), un élément de blindage thermique, ou une chemise de combustion.

5. Machine à écoulement rotationnel selon la revendication 4, **caractérisée en ce que** le trou calibré (18) est délimité par une extrémité (23) de la pale (1) qui offre ladite ouverture de buse au moins (13), et le logement ou un composant relié au logement de la machine à écoulement rotationnel, et l'ouverture de buse au moins (13) est reliée à un canal de refroidissement (11) à l'intérieur de la pale (1) afin de refroidir la pale (1), et/ou le trou calibré (18) est délimité par une extrémité (23) de la pale (1) et le logement ou un composant relié au logement de la machine à écoulement rotationnel, moyennant quoi le logement ou le composant offre l'ouverture de buse au moins (13), et l'ouverture de buse au moins (13) est reliée à un canal de refroidissement (11) à l'intérieur du logement ou du composant relié au logement afin de refroidir le logement ou le composant.

6. Machine à écoulement rotationnel selon la revendication 4, **caractérisée en ce que** le trou calibré (18) est délimité par une section d'une plate-forme radialement intérieure (2) de la pale (1) et une section d'une plate-forme radialement extérieure (5) d'une aube (4), et l'ouverture de buse au moins (13) se trouve au niveau de la section de pale (1) ou d'aube (4) et est reliée à un canal de refroidissement (11) afin de refroidir la pale (1) ou l'aube (4), respectivement.

7. Machine à écoulement rotationnel selon la revendication 5 ou 6, **caractérisée en ce que** le canal de refroidissement (11) est un canal de refroidissement convectif ou comprend un système de refroidissement par impact de jets.

8. Procédé de restriction d'un écoulement de fuite au sein d'un trou calibré (18) délimité par au moins un composant rotatif (16) et au moins un composant stationnaire (17) en injectant un écoulement de liquide ou de gaz (14) dans le trou calibré (18), le sens d'écoulement étant transversal par rapport au sens de l'écoulement de fuite (18), **caractérisé en ce que** l'écoulement de liquide ou de gaz (14) sert de milieu de refroidissement pour refroidir le composant rotatif et/ou stationnaire (16, 17) avant qu'il pénètre dans le trou calibré (18), dans lequel l'écoulement de liquide ou de gaz (14) est orienté vers le trou calibré (18) de sorte qu'une dynamique de rotation du composant rotatif (16) soit améliorée ou réduite par un impact de l'écoulement de liquide ou de gaz (14) sur le composant rotatif ou stationnaire (16, 17).

9. Procédé selon la revendication 8, **caractérisé en ce que** les composants rotatif et stationnaire (16, 17) font partie d'une machine à écoulement rotatif telle qu'un étage de compresseur ou de turbine d'une turbine à gaz.
